# FASCICULE DE BREVET EUROPEEN

(11) **EP 1 044 594 B1**
(45) Date de publication et mention de la délivrance du brevet: **03.11.2004**
(21) Numéro de dépôt: 00440092.5
(22) Date de dépôt: 04.04.2000
(51) Int. Cl.: A01D 43/10, F16H 7/14

(54) **Faucheuse**
Mähmaschine
Mowing machine

(30) Priorité: 16.04.1999 FR 9904927
(43) Date de publication de la demande: 18.10.2000
(73) Titulaire: KUHN S.A., 67706 Saverne Cedex (FR)
(72) Inventeur: Walch, Martin, 67490 Dettwiller (FR); Wattron, Bernard, 67700 Haegen (FR)
(74) Mandataire: Andres, Jean-Claude

(56) Documents cités:
- EP-A- 0 343 699
- BE-A- 441 177
- DE-A- 1 482 759
- DE-C- 958 627
- US-A- 4 189 902
- US-A- 5 722 222

## Description

La présente invention concerne un dispositif de traitement de fourrage coupé comprenant :
- un rotor de traitement susceptible de tourner autour d'un axe de rotation s'étendant, durant le travail, sensiblement horizontalement et transversalement à la direction d'avance,
- un premier support implanté dans le voisinage d'une première extrémité du rotor de traitement et comportant un premier palier dans lequel est guidée en rotation cette première extrémité du rotor de traitement,
- un deuxième support implanté dans le voisinage d'une deuxième extrémité du rotor de traitement et comportant un deuxième palier dans lequel est guidée en rotation cette deuxième extrémité du rotor de traitement,
- un dispositif d'entraînement du rotor de traitement comprenant un organe d'entraînement et un dispositif de transmission qui comporte :
   * une première roue montée sur un arbre de sortie de l'organe d'entraînement,
   * une deuxième roue montée sur la première extrémité du rotor de traitement,
   * au moins un organe de transmission sans fin enroulé sur cette première roue et cette deuxième roue,
   * un mécanisme de réglage de la tension de cet (ces) organe(s) de transmission sans fin (US-A-4 189 902).

Il est connu dans l'état de la technique une faucheuse conditionneuse (KUHN FC 300) comportant un tel dispositif de traitement de fourrage coupé qui comporte dans les grandes lignes un rotor de traitement susceptible de tourner autour d'un axe de rotation et un dispositif d'entraînement dudit rotor. Ce dispositif d'entraînement comporte lui-même un organe d'entraînement et un dispositif de transmission. Ce dispositif de transmission comporte :
- une première roue montée sur un arbre de sortie de l'organe d'entraînement,
- une deuxième roue montée sur une première extrémité du rotor de traitement,
- des organes de transmission sans fin enroulés sur cette première roue et cette deuxième roue et,
- un mécanisme de réglage de la tension de ces organes de transmission sans fin.

Ce mécanisme de réglage de la tension des organes de transmission sans fin comporte une roue supplémentaire sur laquelle prennent appui les organes de transmission. Cette roue supplémentaire est liée à un bras au moyen d'une première liaison du type pivot et le bras est lui-même lié à une structure support au moyen d'une deuxième liaison du type pivot. Ce bras peut être pivoté autour de la deuxième liaison au moyen d'un système vis-écrou de manière à permettre le réglage de la tension des organes de transmission. Pour assurer le maintien dans la position de réglage souhaitée de la roue supplémentaire, il est prévu en sus un ressort qui agit sur l'écrou du système vis-écrou.

Un tel mécanisme de réglage de la tension des organes de transmission est donc relativement onéreux et complexe.

Le but de la présente invention est d'améliorer et de simplifier ce dispositif d'entraînement tout en veillant à obtenir une réalisation économique.

A cet effet, le dispositif de traitement de fourrage coupé est caractérisé en ce que le mécanisme de réglage de la tension de 1' (des) organe(s) de transmission sans fin comporte le premier palier et la deuxième roue qui peuvent être éloignés de la première roue, ainsi que des moyens qui permettent de maintenir le premier palier et la deuxième roue dans la position de réglage souhaitée.

L'invention concerne également les caractéristiques suivantes considérées isolément ou dans toutes leurs combinaisons techniquement possibles :
- les moyens qui permettent de maintenir le premier palier et la deuxième roue dans la position de réglage souhaitée immobilisent ledit premier palier et ladite deuxième roue dans ladite position ;
- le premier support comporte un organe porteur auquel est lié le premier palier au moyen d'une articulation d'axe sensiblement parallèle à l'axe de rotation du rotor de traitement ;
- l'articulation liant le premier palier à l'organe porteur est du type élastique ;
- les moyens qui permettent de maintenir le premier palier et la deuxième roue dans la position de réglage souhaitée, comportent un organe tendeur qui agit sur le premier palier ;
- l'organe tendeur agit sensiblement suivant une droite passant par un axe de rotation de la première roue et un axe de rotation de la deuxième roue ;
- l'organe tendeur est une jambe de force télescopique ;
- la jambe de force télescopique comprend deux filetages à pas inversés ;
- le deuxième palier est du type rotule.
- le deuxième support comporte un organe porteur auquel est lié le deuxième palier au moyen d'une liaison élastique.

L'invention concerne également une faucheuse comportant au moins un mécanisme de coupe et au moins un dispositif de traitement du fourrage coupé par le mécanisme de coupe, ledit dispositif de traitement du fourrage coupé présentant une ou plusieurs des caractéristiques ci-dessus.

D'autres objets, caractéristiques et avantages de l'invention apparaissent dans la description suivante avec références aux dessins annexés qui représentent, à titre d'exemples non limitatifs, une forme de réalisation de la présente invention.

Sur ces dessins :
- la **figure 1** représente une faucheuse, en vue de dessus, comportant un dispositif de traitement du fourrage coupé selon l'invention ;
- la **figure 2** représente, à une autre échelle, une vue suivant la flèche II définie sur la figure 1 ;
- la **figure 3** représente un agrandissement de la figure 1 montrant le premier palier en coupe ;
- la **figure 4** représente un agrandissement de la figure 1 montrant le deuxième palier en coupe.

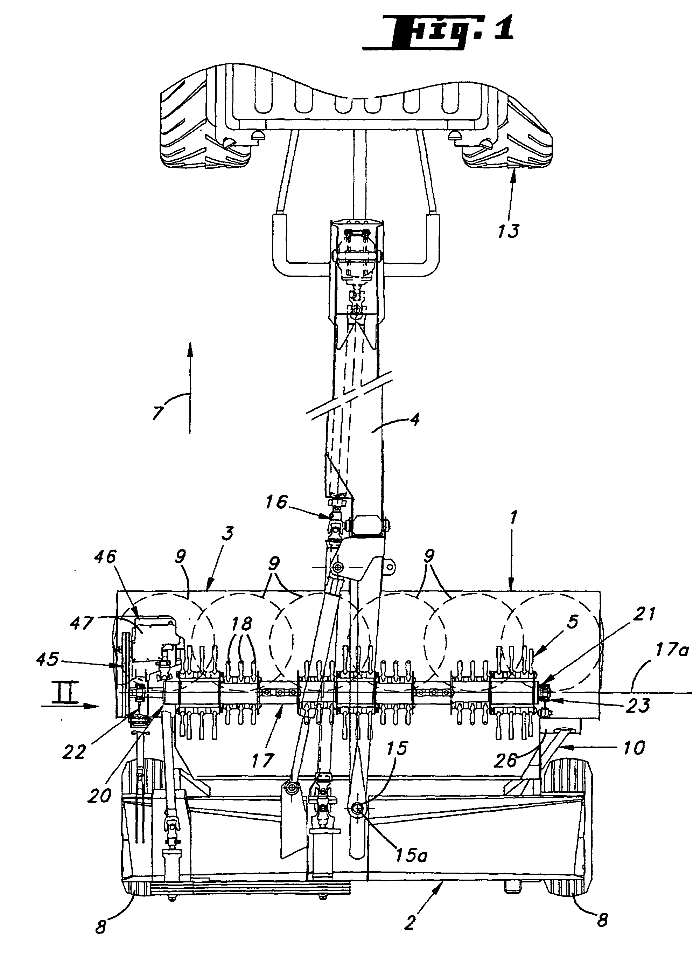

Sur les figures 1 à 4, on voit une faucheuse (1) comportant, selon l'exemple de réalisation représenté, un châssis (2), un mécanisme de coupe (3), un timon (4) et un dispositif de traitement (5) du fourrage coupé par ledit mécanisme de coupe (3).

Le châssis (2) s'étend, notamment en position de travail, transversalement à la direction d'avance (7) et comporte, selon l'exemple de réalisation représenté, deux roues (8) au moyen desquelles il peut être déplacé.

Dans la suite de la description, les notions suivantes "avant", "arrière", "devant" et "derrière" sont définies par rapport au sens d'avance (7) indiqué par la flèche de la direction d'avance (7) et les notions "droite" et "gauche" sont définies en regardant la faucheuse (1), de l'arrière, dans le sens d'avance (7).

Le mécanisme de coupe (3) comporte des organes de coupe (9) (représentés de manière schématique sur la figure 1) lesquels sont destinés à couper la récolte sur pied, et est suspendu au châssis (2) de manière déplaçable, au moyen d'un dispositif de suspension (10).

Le timon (4) est, quant à lui, lié d'une part à un véhicule tracteur (13) de manière connue par l'homme du métier, et d'autre part au châssis (2) au moyen d'une première articulation (15) d'axe géométrique (15a) au moins sensiblement vertical.

Il est en sus prévu un mécanisme d'entraînement (16) permettant d'entraîner, à partir du véhicule tracteur (13), d'une part les organes de coupe (9) du mécanisme de coupe (3) et d'autre part le dispositif de traitement (5) du fourrage coupé. A cet effet, le dispositif de traitement (5) du fourrage coupé comporte un rotor de traitement (17) destiné à tourner autour d'un axe de rotation (17a) s'étendant, durant le travail, sensiblement horizontalement et transversalement à la direction d'avance (7). Cet axe de rotation (17a) est, selon l'exemple de réalisation représenté, confondu avec l'axe longitudinal du rotor de traitement (17). Ce rotor de traitement (17) comporte un certain nombre d'éléments de traitement (18) qui sont liés de manière pivotante audit rotor de traitement (17).

Ce rotor de traitement (17) comporte en outre une extrémité latérale gauche (20) et une extrémité latérale droite (21).

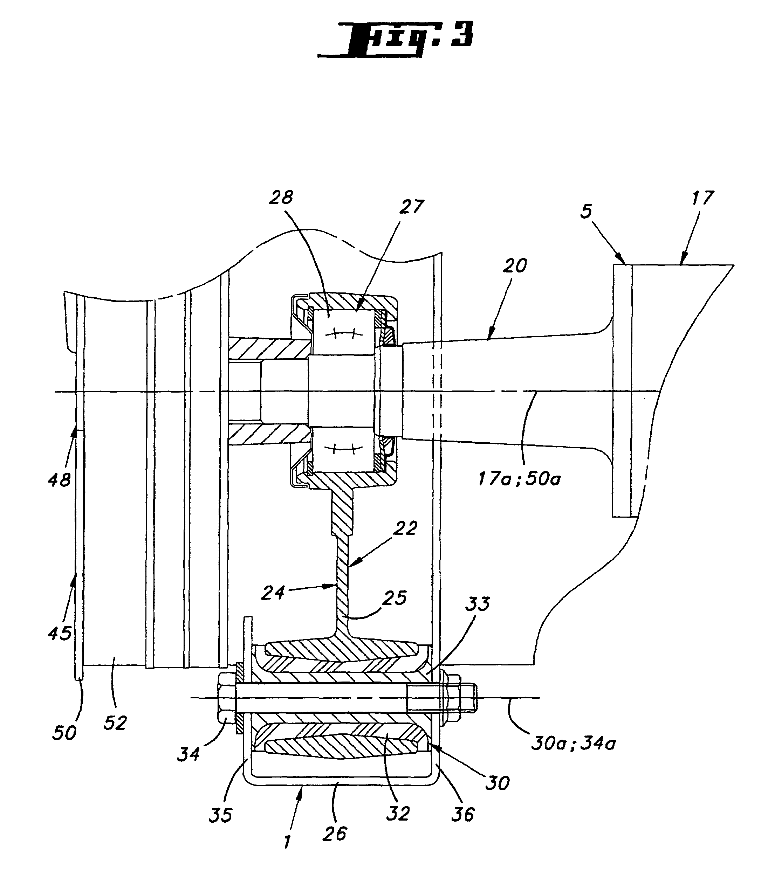

Le dispositif de traitement (5) du fourrage coupé comporte en sus un premier support (22) permettant de supporter l'extrémité latérale gauche (20) du rotor de traitement (17) et un deuxième support (23) permettant de supporter l'extrémité latérale droite (21) dudit rotor de traitement (17). Pour ce faire, le premier support (22) est implanté dans le voisinage de l'extrémité latérale gauche (20) et comporte un premier palier (24) dans lequel est guidée en rotation l'extrémité latérale gauche (20) du rotor de traitement (17). A la lumière de la figure 3, on voit que le premier palier (24) est composé, selon l'exemple de réalisation représenté, d'une bielle (25) liée d'une part à un organe porteur (26) faisant partie du premier support (22) et d'autre part à l'extrémité latérale gauche du rotor de traitement (17). La bielle (25) est liée à l'extrémité latérale gauche du rotor de traitement (17) au moyen d'une liaison (27) du type pivot qui est composée, selon l'exemple de réalisation représenté d'un roulement rotulant (28) permettant avantageusement une rotation dudit rotor de traitement (17) par rapport à ladite bielle (25) suivant les trois axes trigonométriques.

La bielle (25) est liée à l'organe porteur (26) au moyen d'une articulation (30) du type élastique comportant un axe (30a) sensiblement parallèle à l'axe de rotation (17a) du rotor de traitement (17). Cette articulation (30) du type élastique comporte d'une part un élément élastique (32) qui peut être réalisé en élastomère naturel ou synthétique et d'autre part une bague (33) de forme cylindrique sur l'extérieur de laquelle est fixé l'élément élastique (32) et au travers de laquelle s'étend une vis (34) d'axe longitudinal (34a) au moins sensiblement parallèle à l'axe de rotation (17a) du rotor de traitement (17). Cette bague (33) est située entre deux ailes (35, 36) de l'organe porteur (26) formant ainsi une chape. Un tel élément élastique (32) permet avantageusement de filtrer tout ou partie des vibrations entre le rotor de traitement (17) et l'organe porteur (26) et autorise en sus un mouvement relatif du type rotulant de la bielle (25) par rapport audit organe porteur (26) ce qui facilite considérablement le montage de ladite bielle (25) sur ledit organe porteur (26) et leur réalisation.

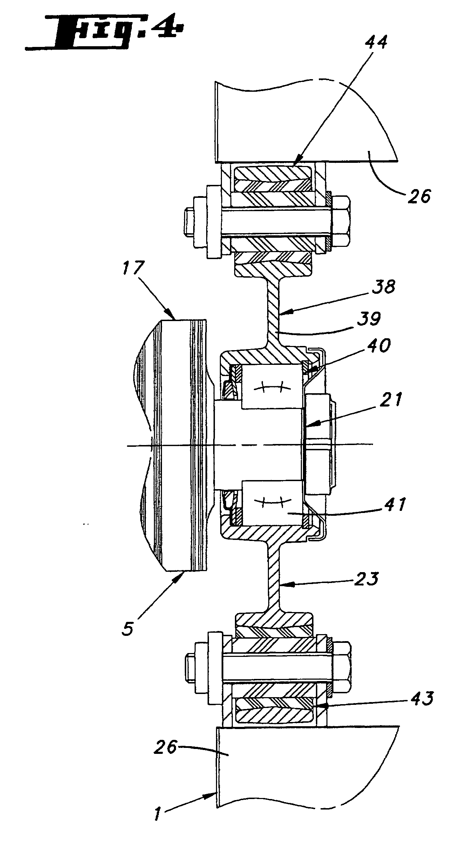

Le deuxième support (23) est, quant à lui, implanté dans le voisinage de l'extrémité latérale droite (21) et comporte un deuxième palier (38) dans lequel est guidée en rotation l'extrémité latérale droite (21) du rotor de traitement (17). A la lumière de la figure 4, on voit que le deuxième palier (38) est composé, selon l'exemple de réalisation représenté, d'une bielle double (39) liée d'une part à l'organe porteur (26) et d'autre part à l'extrémité latérale droite (21) du rotor de traitement ( 17).

La bielle double (39) est liée à l'extrémité latérale droite (21) du rotor de traitement (17) au moyen d'une autre liaison (40) du type pivot qui est également composée d'un roulement rotulant (41) permettant avantageusement une rotation du rotor de traitement (17) par rapport à ladite bielle double (39) suivant les trois axes trigonométriques.

La bielle double (39) est liée à l'organe porteur (26) au moyen de deux articulations supplémentaires (43, 44) situées diamétralement opposées l'une en face de l'autre par rapport à l'autre liaison (40). Chaque articulation supplémentaire (43, 44) est également du type élastique et comporte des éléments identiques à ceux qui forment l'articulation (30) décrite précédemment. Ces deux articulations supplémentaires (43, 44) permettent donc également de filtrer tout ou partie des vibrations entre le rotor de traitement (17) et l'organe porteur (26) et autorisent également un mouvement relatif du type rotulant de la bielle double (39) par rapport audit organe porteur (26) pour faciliter le montage et la réalisation desdites articulations supplémentaires (43, 44) sur ledit organe porteur (26).

On notera encore que aucune des articulations (30, 43, 44) comportant un élément élastique ne nécessite une intervention de l'opérateur pour l'entretien.

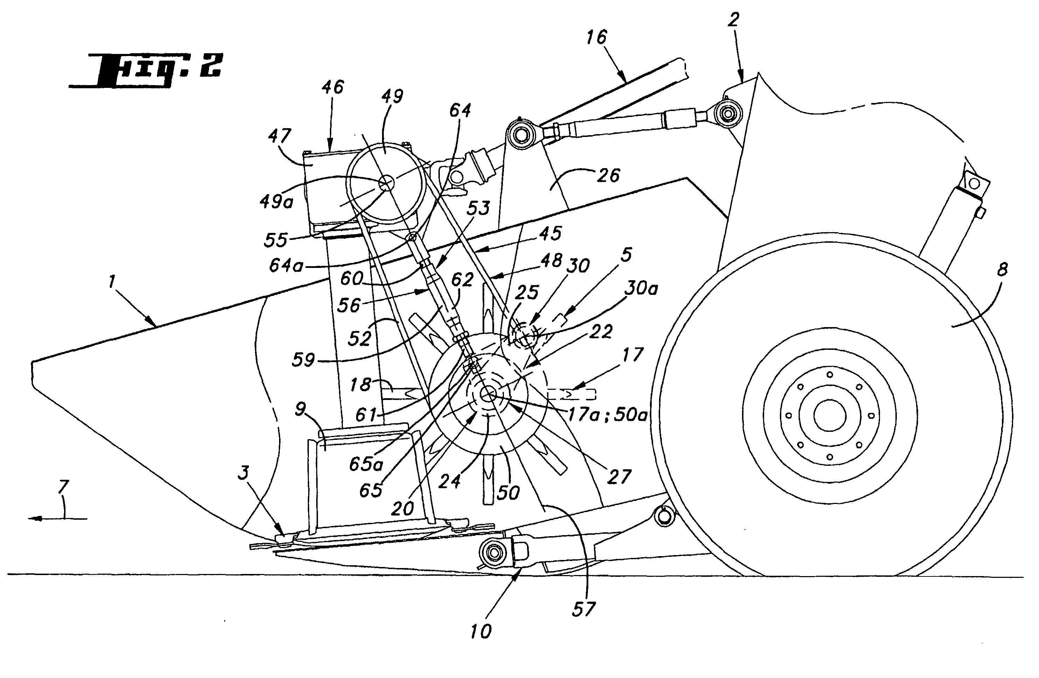

A la lumière de la figure 2, on voit encore que le dispositif de traitement (5) de fourrage coupé comporte un dispositif d'entraînement (45) destiné à entraîner en rotation le rotor de traitement (17) du fourrage coupé. A cet effet, le dispositif d'entraînement (45) comporte un organe d'entraînement (46) qui est composé, selon l'exemple de réalisation représenté, par un boîtier (47) entraîné par le mécanisme d'entraînement (16) de la faucheuse (1).

Ce dispositif d'entraînement (45) comporte en outre un dispositif de transmission (48) contenant lui-même une première roue (49), une deuxième roue (50), un organe de transmission sans fin qui est, selon l'exemple de réalisation représenté, une courroie (52) et un mécanisme de réglage de la tension (53) de cet organe de transmission sans fin. La première roue (49) est montée sur un arbre de sortie (55) du boîtier (47) tandis que la deuxième roue (50) est montée sur l'extrémité latérale gauche (20) du rotor de traitement (17).

La courroie (52) est enroulée sur la première roue (49) et sur la deuxième roue (50). A la lumière de la figure 2, on voit que le mécanisme de réglage de la tension (53) de la courroie (52) comporte le premier palier (24) et la deuxième roue (50) et permet en sus d'éloigner ladite deuxième roue (50) de la première roue (49). Pour assurer la tension de la courroie (52) le mécanisme de réglage de la tension (53) comporte en sus des moyens qui permettent de maintenir le premier palier (24) et la deuxième roue (50) dans la position de réglage souhaitée, plus précisément ces moyens permettent d'immobiliser ledit premier palier (24) et ladite deuxième roue (50) dans ladite position. A cet effet, les moyens qui permettent de maintenir le premier palier (24) et la deuxième roue (50) dans la position de réglage souhaitée comportent un organe tendeur (56) qui agit sur le premier palier (24) suivant une droite (57) passant au moins sensiblement par l'axe de rotation (49a) de la première roue (49) et l'axe de rotation (50a) de la deuxième roue (50). Selon l'exemple de réalisation représenté, cet organe tendeur (56) est constitué d'une jambe de force télescopique (59) comportant une première tige filetée (60), une deuxième tige filetée (61) et un tube taraudé (62) dans lequel viennent se visser de part et d'autre lesdites tiges filetées (60, 61).

Le filetage de la première tige filetée (60) est inversé par rapport au filetage de la deuxième tige filetée (61) ce qui permet avantageusement en tournant le tube taraudé (62) dans un sens ou dans l'autre d'allonger ou de raccourcir la jambe de force télescopique (59).

A cet effet, pour tendre la courroie (52), la première tige filetée (60) est liée d'une part à un élément fixe qui est, selon l'exemple de réalisation représenté, constitué du boîtier (47) au moyen d'une autre liaison (64) du type pivot d'axe longitudinal (64a) et la deuxième tige filetée (61) est liée à la bielle (25) du premier support (22) au moyen d'une liaison supplémentaire (65) du type pivot d'axe longitudinal (65a).

On notera que ces deux axes longitudinaux (64a, 65a) sont au moins sensiblement parallèles entre eux et au moins sensiblement parallèles à l'axe de rotation (17a) du rotor de traitement (17).

Ces deux axes longitudinaux (64a, 65a) sont situés, selon une vue de côté représentée par la figure 2, au moins sensiblement sur la droite (57) entre l'axe de rotation (49a) de la première roue (49) et l'axe de rotation (50a) de la deuxième roue (50). Une telle implantation des deux axes longitudinaux (64a, 65a) permet à la jambe de force télescopique (59) d'agir directement sur la bielle (25) et donc sur la deuxième roue (50) ce qui facilite considérablement la mise en oeuvre du réglage de la tension de la courroie (52).

Ainsi, pour régler la tension de la courroie (52), l'opérateur agit directement sur le tube taraudé (62) de la jambe de force télescopique (59) en faisant tourner cette dernière autour de la droite (57) dans un sens ou dans l'autre ce qui a pour effet d'allonger ou de raccourcir ladite jambe de force télescopique (59) et qui permet donc d'éloigner ou de rapprocher la deuxième roue (50) de la première roue (49) selon que l'on veut tendre ou détendre la courroie (52).

A cet effet, lorsque la deuxième roue (50) s'éloigne ou se rapproche de la première roue (49), le premier palier (24) pivote autour de l'axe longitudinal (30a) de l'articulation (30) ce qui a pour effet de faire pivoter quelque peu le rotor de traitement (17) autour du roulement rotulant (41) liant l'extrémité latérale droite (21) dudit rotor de traitement (17) à la bielle double (39) du deuxième support (23). On notera que l'opération de réglage de la tension de la courroie (52) ne nécessite aucun outillage et que l'opérateur agit directement sur le tube taraudé (62) avec ses mains.

Diverses modifications peuvent être apportées à l'exemple qui vient d'être décrit, notamment en ce qui concerne la constitution des divers éléments ou par substitution d'équivalents techniques sans pour autant sortir du domaine de protection défini par les revendications.

C'est ainsi qu'il est, par exemple, parfaitement possible que le dispositif de transmission (48) comporte deux ou davantage de courroies pour transmettre plus de puissance de la première roue (49) à la deuxième roue (50).

Il peut également être prévu un dispositif de blocage permettant de bloquer la jambe de force télescopique après le réglage de la tension de la courroie (52).

## Revendications

1. Dispositif de traitement de fourrage coupé comprenant :
- un rotor de traitement (17) susceptible de tourner autour d'un axe de rotation (17a) s'étendant, durant le travail, sensiblement horizontalement et transversalement à la direction d'avance (7),
- un premier support (22) implanté dans le voisinage d'une première extrémité (20) du rotor de traitement (17) et comportant un premier palier (24) dans lequel est guidée en rotation cette première extrémité (20) du rotor de traitement (17),
- un deuxième support (23) implanté dans le voisinage d'une deuxième extrémité (21) du rotor de traitement (17) et comportant un deuxième palier (38) dans lequel est guidée en rotation cette deuxième extrémité (21) du rotor de traitement (17),
- un dispositif d'entraînement (45) du rotor de traitement (17) comprenant un organe d'entraînement (46) et un dispositif de transmission (48) qui comporte :
* une première roue (49) montée sur un arbre de sortie (55) de l'organe d'entraînement (46),
* une deuxième roue (50) montée sur la première extrémité (20) du rotor de traitement (17),
* au moins un organe de transmission sans fin (52) enroulé sur cette première roue (49) et cette deuxième roue (50),
* un mécanisme de réglage de la tension (53) de cet (ces) organe(s) de transmission sans fin (52),
***caractérisé en ce* que** le mécanisme de réglage de la tension (53) de l'(des) organe(s) de transmission sans fin (52) comporte le premier palier (24) et la deuxième roue (50) qui peuvent être éloignés de la première roue (49) ainsi que des moyens qui permettent de maintenir le premier palier (24) et la deuxième roue (50) dans la position de réglage souhaitée.

2. Dispositif de traitement de fourrage coupé selon la revendication 1, ***caractérisé en ce* que** les moyens qui permettent de maintenir le premier palier (24) et la deuxième roue (50) dans la position de réglage souhaitée immobilisent ledit premier palier (24) et ladite deuxième roue (50) dans ladite position.

3. Dispositif de traitement de fourrage coupé selon la revendication 1 ou 2, ***caractérisé en ce* que** le premier support (22) comporte un organe porteur (26) auquel est lié le premier palier (24) au moyen d'une articulation (30) d'axe (30a) sensiblement parallèle à l'axe de rotation (17a) du rotor de traitement (17).

4. Dispositif de traitement de fourrage coupé selon la revendication 3, ***caractérisé en ce* que** l'articulation (30) liant le premier palier (24) à l'organe porteur (26) est du type élastique.

5. Dispositif de traitement de fourrage coupé selon l'une quelconque des revendications 1 à 4, ***caractérisé en ce* que** les moyens qui permettent de maintenir le premier palier (24) et la deuxième roue (50) dans la position de réglage souhaitée, comportent un organe tendeur (56) qui agit sur le premier palier (24).

6. Dispositif de traitement de fourrage coupé selon la revendication 5, ***caractérisé en ce* que** l'organe tendeur (56) agit sensiblement suivant une droite (57) passant par un axe de rotation (49a) de la première roue (49) et un axe de rotation (50a) de la deuxième roue (50).

7. Dispositif de traitement de fourrage coupé selon la revendication 5 ou 6, ***caractérisé en ce* que** l'organe tendeur (56) est une jambe de force télescopique (59).

8. Dispositif de traitement de fourrage coupé selon la revendication 7, ***caractérisé en ce* que** la jambe de force télescopique (59) comprend deux filetages à pas inversés.

9. Dispositif de traitement de fourrage coupé selon l'une quelconque des revendications 1 à 8, ***caractérisé en ce* que** le deuxième palier (38) est du type rotule.

10. Dispositif de traitement de fourrage coupé selon l'une quelconque des revendications 1 à 9, ***caractérisé en ce* que** le deuxième support (23) comporte un organe porteur (26) auquel est lié le deuxième palier (38) au moyen d'une liaison élastique.

11. Faucheuse comportant au moins un mécanisme de coupe (3) et au moins un dispositif de traitement (5) du fourrage coupé par le mécanisme de coupe (3), ***caractérisée en ce* que** le dispositif de traitement (5) du fourrage coupé est un dispositif selon l'une quelconque des revendications 1 à 10.

## Patentansprüche

1. Vorrichtung zur Aufbereitung von geschnittenem Futter, die
- einen Aufbereitungsrotor (17), der sich um eine Drehachse (17a) drehen kann, die sich im Betrieb im Wesentlichen horizontal und quer zur Fahrtrichtung (7) erstreckt,
- eine in der Nähe eines ersten Endes (20) des Aufbereitungsrotors (17) angebrachte erste Stütze (22), die ein erstes Lager (24) aufweist, in dem dieses erste Ende (20) des Aufbereitungsrotors (17) drehbar geführt wird,
- eine in der Nähe eines zweiten Endes (21) des Aufbereitungsrotors (17) angebrachte zweite Stütze (23), die ein zweites Lager (38) aufweist, in dem dieses zweite Ende (2 1 ) des Aufbereitungsrotors (17) drehbar geführt wird,
- eine Vorrichtung (45) zum Antrieb des Aufbereitungsrotors (17) mit einem Antriebsglied (46) und einer Kraftübertragungsvorrichtung (48), mit
* einem ersten Rad (49), das auf einer Ausgangswelle (55) des Antriebsglieds (46) angebracht ist,
* einem zweiten Rad (50), das an dem ersten Ende (20) des Aufbereitungsrotors (17) angebracht ist,
* mindestens einem Endlostriebglied (52), das dieses erste Rad (49) und dieses zweite Rad (50) umschlingt,
* einem Mechanismus (53) zum Einstellen der Spannung dieses (dieser) Endlostriebglieds (Endlostriebglieder) (52),
umfasst, ***dadurch gekennzeichnet,* dass** der Mechanismus (53) zur Einstellung der Spannung des (der) Endlostriebglieds (Endlostriebglieder) (52) das erste Lager (24) und das zweite Rad (50), die von dem ersten Rad (49) entfernt sein können, sowie Mittel, die es gestatten, das erste Lager (24) und das zweite Rad (50) in der gewünschten Einstellposition zu halten, aufweist.

2. Vorrichtung zur Aufbereitung von geschnittenem Futter nach Anspruch 1, ***dadurch gekennzeichnet,* dass** die Mittel, die es gestatten, das erste Lager (24) und das zweite Rad (50) in der gewünschten Einstellposition zu halten, das erste Lager (24) und das zweite Rad (50) in der Position festlegen.

3. Vorrichtung zur Aufbereitung von geschnittenem Futter nach Anspruch 1 oder 2, ***dadurch gekennzeichnet,* dass** die erste Stütze (22) ein Tragglied (26) aufweist, mit dem das erste Lager (24) mittels eines Gelenks (30) mit einer im Wesentlichen parallel zur Drehachse (17a) des Aufbereitungsrotors (17) verlaufenden Achse (30a) verbunden ist.

4. Vorrichtung zur Aufbereitung von geschnittenem Futter nach Anspruch 3, ***dadurch gekennzeichnet,* dass** das das erste Lager (24) mit dem Tragglied (26) verbindende Gelenk (30) elastischer Art ist.

5. Vorrichtung zur Aufbereitung von geschnittenem Futter nach irgend einem der Ansprüche 1 bis 4, ***dadurch gekennzeichnet,* dass** die Mittel, die es gestatten, das erste Lager (24) und das zweite Rad (50) in der gewünschten Einstellposition zu halten, ein Spannglied (56) aufweisen, das auf das erste Lager (24) einwirkt.

6. Vorrichtung zur Aufbereitung von geschnittenem Futter nach Anspruch 5, ***dadurch gekennzeichnet,* dass** das Spannglied (56) im Wesentlichen entlang einer Geraden (57), die eine Drehachse (49a) des ersten Rads (49) und eine Drehachse (50a) des zweiten Rads (50) durchquert, wirkt.

7. Vorrichtung zur Aufbereitung von geschnittenem Futter nach Anspruch 5 oder 6, ***dadurch gekennzeichnet,* dass** das Spannglied (56) ein Teleskopfederbein (59) ist.

8. Vorrichtung zur Aufbereitung von geschnittenem Futter nach Anspruch 7, ***dadurch gekennzeichnet,* dass** das Teleskopfederbein (59) zwei gegenläufige Gewinde aufweist.

9. Vorrichtung zur Aufbereitung von geschnittenem Futter nach irgend einem der Ansprüche 1 bis 8, ***dadurch gekennzeichnet,* dass** das zweite Lager (38) ein Gelenklager ist.

10. Vorrichtung zur Aufbereitung von geschnittenem Futter nach irgend einem der Ansprüche 1 bis 9, ***dadurch gekennzeichnet,* dass** die zweite Stütze (23) ein Tragglied (26) aufweist, mit dem das zweite Lager (38) mittels einer elastischen Verbindung verbunden ist.

11. Mähmaschine mit mindestens einem Schneidmechanismus (3) und mindestens einer Vorrichtung (5) zur Aufbereitung von durch den Schneidmechanismus (3) geschnittenem Futter, ***dadurch gekennzeichnet,* dass** die Vorrichtung (5) zur Aufbereitung des geschnittenen Futters eine Vorrichtung nach irgend einem der Ansprüche 1 bis 10 ist.

## Claims

1. Device for treating cut fodder, comprising:
- a treatment rotor (17) which can rotate about an axis of rotation (17a) extending, during work, approximately horizontally and transversely to the direction of forward travel (7),
- a first support (22) located near a first end (20) of the treatment rotor (17) and comprising a first bearing (24) in which this first end (20) of the treatment rotor (17) is guided in rotation,
- a second support (23) located near a second end (21) of the treatment rotor (17) and comprising a second bearing (38) in which this second end (21) of the treatment rotor (17) is guided in rotation,
- a device (45) for driving the treatment rotor (17), comprising a drive member (46) and a transmission device (48) which comprises:
* a first wheel (49) mounted on an output shaft (55) of the drive member (46),
* a second wheel (50) mounted on the first end (20) of the treatment rotor (17),
* at least one endless transmission member (52) wound around this first wheel (49) and this second wheel (50),
* a mechanism (53) for adjusting the tension in this (these) endless transmission member(s) (52),
***characterized in* that** the mechanism (53) for adjusting the tension in the endless transmission member(s) (52) comprises the first bearing (24) and the second wheel (50) which can both be moved away from the first wheel (49), and means which allow the first bearing (24) and the second wheel (50) to be kept in the desired position of adjustment.

2. Device for treating cut fodder according to Claim 1, ***characterized in* that** the means which allow the first bearing (24) and the second wheel (50) to be kept in the desired position of adjustment immobilize said first bearing (24) and said second wheel (50) in said position.

3. Device for treating cut fodder according to Claim 1 or 2, ***characterized in* that** the first support (22) comprises a carrier member (26) to which the first bearing (24) is connected by means of an articulation (30), the axis (30a) of which is approximately parallel to the axis of rotation (17a) of the treatment rotor ( 17).

4. Device for treating cut fodder according to Claim 3, ***characterized in* that** the articulation (30) connecting the first bearing (24) to the carrier member (26) is of the elastic type.

5. Device for treating cut fodder according to any one of Claims 1 to 4, ***characterized in* that** the means which allow the first bearing (24) and the second wheel (50) to be kept in the desired position of adjustment comprise a tensioning member (56) which acts on the first bearing (24).

6. Device for treating cut fodder according to Claim 5, ***characterized in* that** the tensioning member (56) acts approximately according to a straight line (57) passing through an axis of rotation (49a) of the first wheel (49) and an axis of rotation (50a) of the second wheel (50).

7. Device for treating cut fodder according to Claim 5 or 6, ***characterized in* that** the tensioning member (56) is a telescopic strut (59).

8. Device for treating cut fodder according to Claim 7, ***characterized in* that** the telescopic strut (59) comprises two screw threads of opposite hand.

9. Device for treating cut fodder according to any one of Claims 1 to 8, ***characterized in* that** the second bearing (38) is of the spherical type.

10. Device for treating cut fodder according to any one of Claims 1 to 9, ***characterized in* that** the second support (23) comprises a carrier member (26) to which the second bearing (38) is connected by means of an elastic link.

11. Mower comprising at least one cutting mechanism (3) and at least one device (5) for treating the fodder cut by the cutting mechanism (3), ***characterized in* that** the device (5) for treating the cut fodder is a device according to any one of Claims 1 to 10.
